Europäisches Patentamt

European Patent Office

Office européen des brevets

(19)

(11) **EP 1 293 237 A2**

(12) **EUROPEAN PATENT APPLICATION**

(43) Date of publication:
**19.03.2003 Bulletin 2003/12**

(51) Int Cl.⁷: **A63F 13/04**

(21) Application number: **01309777.9**

(22) Date of filing: **21.11.2001**

| | |
|---|---|
| (84) Designated Contracting States:<br>**AT BE CH CY DE DK ES FI FR GB GR IE IT LI LU<br>MC NL PT SE TR**<br>Designated Extension States:<br>**AL LT LV MK RO SI** | (72) Inventor: **McCauley, Jack**<br>**Danville, CA 94506 (US)** |
| (30) Priority: **06.09.2001 US 947479** | (74) Representative: **Williams, Ceili**<br>**Stevens Hewlett & Perkins**<br>**Halton House**<br>**20/23 Holborn**<br>**London EC1N 2JD (GB)** |
| (71) Applicant: **McCauley, Jack**<br>**Danville, CA 94506 (US)** | |

(54) **Method and device for optical gun interaction with a computer game system**

(57)     A device and a method for integrating an optical gun with a computer game system and within a computer game scenario are provided. The preferred embodiment includes an optical gun, or gun, with a communications interface, such as a USB interface, with the computer game system. The gun has sensors that sense when (1) a player is grasping a gun handle, or (2) the gun is holstered. The gun simulates a recoil force when a simulated round is fired. A battery is charged between game periods and drawn down during play. A laser beam is emitted from the gun only when the gun is pointed at a game video screen. Green and red LED's on the gun indicate the presence of a friend or foe character or avatar. The gun includes a zoom control that affects the screen representation of the player's view and visibility in the game scenario. The gun may have bidirectional or unidirectional wireless communications with the computer game system, a battery charger and multi-channel radio carrier frequency auto detect. The gun can determine the nature of the game video screen. A video sampling or tapping wire may enable further enhanced features of the gun.

FIG. 1

EP 1 293 237 A2

**Description**

The present invention relates to optical guns that simulate the generation of ballistic gunfire and methods of use of optical guns with computer game systems. More particularly, the present invention relates to the features of optical guns and the degree of realism provided by the methods of use of optical guns within a computer game scenario.

The market for computer game systems is now well established and growing. Improvements in the design and performance of computer game system peripherals can provide significant competitive and economic benefits to several large multinational corporations, such as IBM, SEGA, SONY and MICROSOFT. Inventive work in the area of optical gun design and performance increases as the computer game industry matures. US Pat. No. 6,171,190, Thanasack, January 9, 2001, for example, discloses an a light gun to be used with a conventional personal computer without having to modify the computer with additional circuit boards and operating system changes. The invention of Thanasack, et al. teaches that the light gun can be configured to derive the location on the screen at which the gun is pointing, when the invented light gun is used with a computer system having a VGA card and raster scanning video. Yet the field utility of Thanasack is severely limited to providing light guns that work with computer systems having particular and specific video display methodologies.

Additional features that add to the uniqueness of game play are also of interest to game system manufacturers. US Pat. No. 5,569,085, Igarashi, et al., October 29, 1996 describes an articulating cover on a model gun that is powered to move during game play. Yet the invention of Igarashi, et al. is limited to gun models that have covers driven towards the player during simulated firing of the gun, and directly in response to each trigger actuation or firing session generated by the game player.

Prior art methods of operating optical guns with a digital television present functional difficulties when the actual image displayed on the screen is out of phase with the composite sync signal on the monitor. Prior art guns expect that the composite sync signal and the displayed image on the screen are out of phase by a few billionths-of-a-radian or less. Phase angles greater than this cause the gun to loose sync with the image and thus the gun pointer will wander to a large degree and cease to be of use to the player.

There is, therefore, a long felt need in the computer gaming industry to provide a method and apparatus that improve the enjoyment of a player using an optical gun within a computer game scenario and the increase adaptability of the optical gun for use with digital televisions. There is a further long felt need to provide an optical apparatus and method of design and use thereof that enables a computer game designer to introduce novel features and aspects of peripheral systems that can enhance the novelty and enjoyment of the game player.

It is an object of the present invention to provide an optical gun that interacts with a computer game system.

It is a further object of the present invention to provide a method of use of an optical gun within a computer game scenario.

It is an object of certain preferred embodiments of the present invention to provide an optical gun that senses when player's hand is grasping or proximate to a gun handle or gun trigger.

It is a further object of certain preferred embodiments of the present invention to provide an optical gun that sense when the gun is substantially placed into a holster.

It is another object of certain preferred embodiments of the present invention to provide a gun that simulates a recoil force to the user when a simulated round is fired from the gun.

It is still another object of certain preferred embodiments of the present invention to provide a battery that may be used by the gun during game play and optionally refreshed during a relatively quiet time of gun use.

It is yet another object of certain preferred embodiments of the present invention to provide one or more LED's that indicate the presence of characters or avatars in a game scenario, such as may be categorized as friend or foe or by other qualities or distinctions.

It is a further object of certain preferred embodiments of the present invention to provide a zoom control on the gun, whereby the player's virtual position within a game scenario may be altered, or the field of view presented on a game video screen is affected.

It is yet a further object of certain preferred embodiments of the present invention to provide a wireless communications method and system whereby the gun may unidirectionally communicate with a computer game system.

It is still a further object of certain preferred embodiments of the present invention to provide a wireless communications method and system whereby the gun may bidirectionally communicate with a computer game system.

It is yet another object of certain preferred embodiments of the present invention to provide a wireless communications method and system whereby the system has a multiple radio frequency auto detect for integrating communications with a computer game system.

It is still another object of certain preferred embodiments of the present invention to provide method and system whereby the gun may determine the type of video screen of the computer game system with which the gun is interacting, i.e. distinguishing a 100 Hertz television screen output, or a 120 Hertz television screen output, 10801 line output television, or a high definition television screen output.

It is yet another further object of certain preferred embodiments of the present invention to provide a video sampling cable whereby the gun may actualize enhanced features in interaction with the computer game system, composite video, VGA, SVGA, RGB, S-video or other analog or digital transmission means.

It is an additional object of certain preferred embodiments of the present invention to provide a method to increase the performance of the optical gun with computer games that include digital television.

An optical gun designed in accordance with the method of the present invention includes a body shaped substantially similar to a rifle, a machine gun, a bazooka, a light projectile or missile launcher, a handgun, a pistol, a crossbow, a machine pistol, a grenade launcher, an electrical stun gun, an energy emitter, particle beam or light beam gun, or another suitable manually fired weapon known in the art. The preferred embodiment includes an optical gun having a light sensor, a microprocessor, and a gun body shaped like a semi-automatic pistol with a handgrip, a trigger and a barrel. The preferred embodiment, has a thermal energy detector sensor that registers the proximity of a game player's hand by sensing heat generated from the hand. The thermal energy detector, or hand detector, may be located at or near the trigger. The hand detector may include or be a micro-switch, an Infrared thermal energy detector, or another suitable hand proximity sensor known in the art. The hand detector communicates with the microprocessor. The microprocessor, or gun processor, determines from this communication with the hand sensor when the player's hand is proximate to the gun body.

The invented gun has a holster switch on the body. The holster switch senses when the invented gun is placed into a holster. The invented gun may react to indications from the holster switch and the hand detector to improve power management of the invented gun.

The invented gun further comprises a communications and electrical power interface, such as a Universal Serial Bus, a derivative of the Universal Serial Bus, or another suitable communications and electrical power interface known in the art, such as, for example, a suitable industry standard or proprietary communications bus or a game port system as stipulated by MICROSOFT CORPORATION, SONY, NINTENDO, IBM, NINTENDO CORPORATION, SEGA CORPORATION or the IEEE. The communications and electrical power interface, or comms bus, provides bidirectional communications between the invented gun and the computer game system.

The preferred embodiment includes a small electric motor or actuator that is used to simulate the recoil of an actual weapon. The simulated recoil function is directed by the computer game system and the command to simulate a weapon's recoil is transmitted over the comms bus and from the computer game system. The simulated recoil function may be used in various preferred embodiments of the method of the present invention to inform, reinforce or add to a game scenario ambience when the computer game system determines (1) that the game player has effected a simulated hit on a target, (2) that the game player has been hit within the context of the game scenario, or (3) whenever the game player has effected a simulated firing of the invented gun.

The preferred embodiment includes a battery that delivers electrical energy to electric motor or actuator. The energy delivered from the battery to the motor or actuator may be supplemented by electrical power provided via the comms bus to the motor or actuator. The battery is recharged by comms bus and optionally under the direction of the microprocessor at times when the recoil function is not engaged.

The preferred embodiment includes a laser pointer that is turned on and emits light only when the invented gun is pointed at a video screen of the computer game system. In certain preferred embodiments of the present invention the comms bus is a Universal Serial Bus, or USB, and the optical gun receives instructions from the computer game system to turn on or turn off the laser point via information enclosed in a USB OUT packet or packets. Additionally or alternatively, the motor or control can be actuated by the comms bus, as in found in certain Sony PlayStation games.

The preferred embodiment includes a character or avatar detector. The character or avatar detector, or presence detector, indicates to the game player the presence or approach of a character or avatar within the game scenario, and may indicate a characteristic of the character or avatar, such as by using colored lighted to indicate whether a particular avatar or character is a friend, an ally, a foe, a neutral entity or an innocent party. In certain preferred embodiments of the present invention the presence detector indicates the characteristic when the optical gun is pointed at the character or avatar.

The preferred embodiment includes a zoom function, whereby the orientation or simulated location of the game player within a game scenario is affected by manual manipulations of zoom control features positioned on the optical gun. Alternatively or additionally, the zoom function may affect the field of view presented to the game player by the computer game system, whereby the game player may elect to have a more limited field of view but with a larger presentation of one or more visual elements of the game scenario.

The invented gun can determine the type of image presented by the video screen of the computer game system. The invented gun determines if the video screen is a 50Hz, 60 Hz, 100 Hz. television image, a 120 Hz. television image, digitally enhanced or a high definition television image. The inventive technique applied by the invented gun includes the creation of a virtual time base in a software representation, and using this time base to measure the gun pointing position during a particular frame.

Certain preferred alternate preferred embodiments of the method of the present invention couple the detection by the optical gun of a frame presentation on a television cathode ray tube of the computer game system. A series of digital and analog signal processors embedded in the television substantially modify the input signal and alter the VIDEO timing of the video console input signal and therefrom render the console input signal out of synchronization with an image displayed on the cathode ray tube, or CRT. The gun processor analyzes the video console signal, and generates a phase timing offset signal dynamically while the game is running, then compares this gun processor generated signal to the detector input and therefrom determines an accurate timing for the detector input vis-a-vis the out-of-phases video sampling cable input. Referred to herein are the terms of art of "100Hz", "120Hz", "1080il","Comb Filter", "HDTV" and "DSP".

The invented system further comprises a video sampling cable, the video sampling cable coupled with the microprocessor, and thereby enabling the microprocessor with information about a video file prior to the presentation of the video file on the video screen. The information provided by the video sampling cable to the microprocessor is used by the invented system to enable advanced gaming features. The video sampling cable may be comprised within, added to or included with the comms bus, such as a substantially USB compliant comms bus.

The preferred embodiment, or invented system uses the data received from the computer game system and via the video sampling cable to improve the interaction of the present invention with a computer game system that includes a digital television. A digital television rasterizes the composite signal. The composite signal is generated by the computer game system and transmitted to the digital television via a small signal coaxial cable, twisted pair or other suitable signal transmission means known in the art. An analog television retrieves the composite sync signal and displays the TV signal on the screen in a pure analog form. PAL, NTSC and SECAM are the world-wide standards for composite signals and are roughly similar in form. The standards dictate that a maximum frame rate of 25 and 30 frames/sec for each signal, respectively. To reduce flicker, analog composite sync signals are displayed on the phosphor screen at interleaved half frames to yield a resultant sync rate of 50 and 60 frames/sec (Hz) on the screen. Each frame is divided into two display data sets and each set, or one half of each frame is sequentially displayed at 1/60 (17 milliseconds) each. The frame rates of 25 and 30 frames/sec correspond to the actual frame capture rate of a motion picture film camera and, for simplicity's sake, this is why these two rates are used.

Alternatively, a digital television system digitizes the composite video signal and stores the digitized video data into a RAM memory. The digital television then performs digital signal processing, or DSP, on the digital video file with the use of the RAM memory. After DSP actions on the RAM memory are executed, a DSP processor transmits a resultant video data file as output to a Digital to Analog converter, or DAC, and from the DAC to an analog video screen. One can think of the DSP circuitry of the digital TV as the brain within the television.

Digital televisions are built and marketed in various forms, such as 100Hz, 120Hz, HiDefinition, Wide Screen, 1080il, and HDTV, but these video display systems all work in principally the same way. Most of these digital television embodiments DSP the video data file to enhance the resolution, frame rate, color brightness and provide what's know as a Comb Filter Convolution function to increase sharpness. All of these DSP operations create obstacles for using prior art optical guns in combination with computer game or entertainment systems. A core problem encountered in using an optical gun with a digital television is that the actual image displayed on the digital television video screen is out of phase with the composite sync signal of the monitor. Prior art guns expect that the composite sync signal and the displayed image on the screen are out of phase by a few billionths-of-a-radian or less. Phase angles greater than this cause prior art optical guns to lose sync with the image and thus the gun pointer will wander to a large degree and cease to be of use to the player. A preferred embodiment of the method of the present invention removes the phase angle in software from the gun by (1) recognizing that the gun and the screen are to a large degree always out of phase, (2) calculating this phase angle on a composite sync per-frame basis and then (3) mathematically reducing the offset to zero. The software and high-speed digital hardware components in the gun are both employed to actualize this optional aspect of the method of the present invention. The identification and measurement of these components, the calculation of phase angles, frame rates and the resultant accuracy to a large degree depend on a physical principle in mathematics called the beat frequency.

The following discussion explores the calculation of the phase angle according to a preferred embodiment of the method of the present invention. The current composite sync signal (single pixel) can be represented by the function:

$$FS(t) = k*Sin(w1*t + y) \text{ where } f = w/2Pi \text{ or } 17 \text{ ms (60 Hz) and}$$

y is the phase angle.

And let the image on the digital television video screen (single pixel) be represented by the function:

$$FI(t) = p*Sin(w2*t + q) \text{ where } f = w/2Pi \text{ could equal 60 Hz,}$$

100 Hz, 120Hz, etc., and q is the phase angle.

And let the photo detector of the optical gun of the present invention observe the following:

$$P(t) = FI(t) + FS(t).$$

The photo detector of the present invention will detect a beat frequency which is the composite of these two signals, i.e. FI(t) and FS(t). The preferred embodiment of the method of the present invention is directed to find the values of w2, y and q. The processor in the invented gun does not, in all preferred embodiments of the method of the present invention, attempt to solve the equation. In fact, because of the digital nature of the method of the present invention, it is often simpler and more cost effective to use a table driven method whereby the magnitude |P| peak is collected across a period of one frame. The highest point of this peak is the pointed position on the screen of the gun. The table contains time offsets from the start of the frame (w1*t) = 0.

As the value of phase angle y is at zero, or may be assumed to be zero, in the instant application, the value of q may be derived from these relationships:

$$P(t) = 2*sin(t*(w1-w2) * cos( -q/2)$$

$$q = -2*csec( 1/(2*sin(t*(w1-w2)))$$

The value of q is therefore determinable where two fundamental frequencies w1 and w2 are quantified. The value of w1 is either supplied to the optical gun by the computer game system or derived by the optical gun by information supplied to the optical gun by the computer game system. The value of is determinable by detecting the time period T between peaks of maximal pixel brightening, or Pmax, of an area or pixel of the video screen. The value of Pmax may be determined by multiple observations of maximal pixel brightening and by applying averaging and other suitable mathematical or statistical methods of determining an approximate value of T.

The preferred embodiment takes the following relationship into account:

$$T= 1/w2, \text{ where w is expressed in hertz.}$$

The value of q is therefore determinable as the value of w1 is contained in the software values of the computer game system and the value of w2 can be calculated from pixel brightening detections of the optical gun.

In certain preferred embodiments of the present invention, all computational mathematics performed by the invented optical gun processor is executed with 32-bit, two's complement, fixed point notation. The single measurement point may be taken at random.

The preferred embodiment further observes the number of Vsync counts that occur between the start of a frame and the detection of a particular instance of pixel or area brightening of the video display and transmits the Vsync count to the computer game system. The preferred embodiment additionally detects the Hsync count of a width of an area brightening of the video display screen and transmits this Hsync count to the computer game system. The Hsync count is then used to determine the center of the brightening of the area of the display screen, from which determination the orientation of the optical gun to the video display screen is more closely determined.

An alternate preferred embodiment of the method of the present invention, or unidirectional wireless gun, where the unidirectional wireless gun includes a wireless transmitter, and the computer game system includes a wireless receiver. The transmitter sends information about the optical gun's state or detected conditions and sends the information to the receiver of the computer game system by infrared or radio frequency, or other suitable wireless transmission link or means known in the art. The receiver includes a wireless receiver module, a digital logic module and a receiver-to-game system interface. The receiver accepts the information transmitted from the optical gun via the wireless receiver module. The digital logic module then formats a receiver data report that includes the transmitted information. The receiver then sends the receiver data report to the computer game system via the receiver-to-game system interface. The receiver-to-game system interface and the receiver data report may be USB compliant or substantially USB compliant, or function in accordance with a suitable industry standard or proprietary communications bus or game port system as stipulated by MICROSOFT CORPORATION, SONY, SEGA, NINTENDO, IBM or the IEEE, or another suitable communications protocol known in the art.

A second alternate preferred embodiment of the method of the present invention, or bidirectional wireless gun, includes a transceiver in the bidirectional wireless gun and a game transceiver coupled with the computer game system. The optical gun transceiver sends and receives information from and to the game transceiver. The optical gun transceiver sends gun information about the optical gun's state or detected conditions and sends the gun information to the transceiver of the computer game system by infrared or radio frequency, or other suitable wireless transmission means known in the art. The game transceiver includes a wireless transceiver module, a digital logic module and a receiver-to-game system interface. The game transceiver accepts the gun information transmitted from the optical gun via the wireless transceiver module. The digital logic module then formats a receiver data report that includes the transmitted gun information. The game transceiver then sends the receiver data report to the computer game system via the transceiver-to-game system interface. The transceiver-to-game system interface and the receiver data report may be USB compliant or substantially USB compliant, or function in accordance with a suitable industry standard or proprietary communications bus or game port system as stipulated by MICROSOFT CORPORATION, SONY, SEGA, NINTENDO, IBM or the IEEE, or another suitable communications protocol or system known in the art. The game transceiver may additionally transmit data or instruction to the optical gun by suitable industry standard or proprietary wireless transmission means or link known in the art, such as radio frequency or infrared transmission.

The unidirectional wireless gun and the bidirectional wireless gun each have a multiple channel detect to select a radio frequency for information transmission to and/or from the computer game system. The detection of the wireless communications frequency may be done by an automatic function of the bidirectional or the unidirectional wireless, or may alternatively or additionally be controlled by the user by means of manual input, such as buttons, or another suitable manual input means known in the art.

The receiver, transmitter and transceivers may each further comprise a channel selector, whereby a user decides which channel may be used by a particular wireless optical gun to transmit or receive wireless signals to and from the computer game system. This optional capability facilitates the use of two or more optical guns simultaneously with the computer game system by dedicated separate wireless transmission frequencies or band to individual optical guns.

The optical gun includes an interface harness that presents two or more optional hardware connecters to computer game systems. The addition of more than one type connector allows the optical gun to be electrically connected with computer game systems of differing make, model or standardized communications bus compatibility. For example, the optical gun may be mass produced with a plurality of interface connectors, where each connector is selected from a connector type that is compatible with a suitable interface standard known in the art, to include a USB, or a bus that is substantially a USB, or a derivative of a USB, or a variation of a USB, or a modified USB, or a suitable a game port system, a MICROSOFT XBOX game system compatible communications interface, or a NINTENDO game system compatible communications bus, or a SONY PLAYSTATION game system compatible communications bus, or an IBM computer system standards compatible communications bus, or an APPLE COMPUTER computer system standards compatible communications bus known in the art, or an IEEE technology society standard compatible communications bus known in the art , or another suitable standard or proprietary communications bus known in the art. The inclusion of one or more additional interface connectors with the mass-produced optical gun raises the economic value of the optical gun above the prior art by causing the optical gun to have a more ubiquitous range of application and compatibility with commercially available computer game systems.

The optical gun may optionally include a peripheral input module that communicates with the gun microprocessor by wired or wireless means. The gun peripheral input may include a thumbpad, an optical wheel, a foot pedal, a mouse, or another suitable peripheral input device known in the art.

Certain preferred wireless embodiments of the present invention may also have a battery charger, whereby the battery of the optical gun is charged with electrical power by removably connecting a power source or outlet to the battery.

The foregoing and other objects, features and advantages will be apparent from the following description of the preferred embodiment of the invention as illustrated in the accompanying drawings.

These, and further features of the invention, may be better understood with reference to the accompanying specification and drawings depicting the preferred embodiment, in which:

FIG. 1 illustrates an optical gun designed and used in accordance with the method of the present invention and having a wired connection with a computer game system.

FIG. 2 shows an optical gun with a hand detect module of the optical gun of FIG. 1.

FIG. 3 presents a holster proximity-sensing module of the optical gun of FIG. 1.

FIG. 4 illustrates a recoil module of the optical gun of FIG. 1.

FIG. 5 shows a battery charging system of the optical gun of FIG. 1, and presents a laser pointer module, a character or avatar detector, and a zoom control of the optical gun of FIG. 1.

FIG. 6 illustrates the optical gun of FIG. 1 in use with a digital television system.

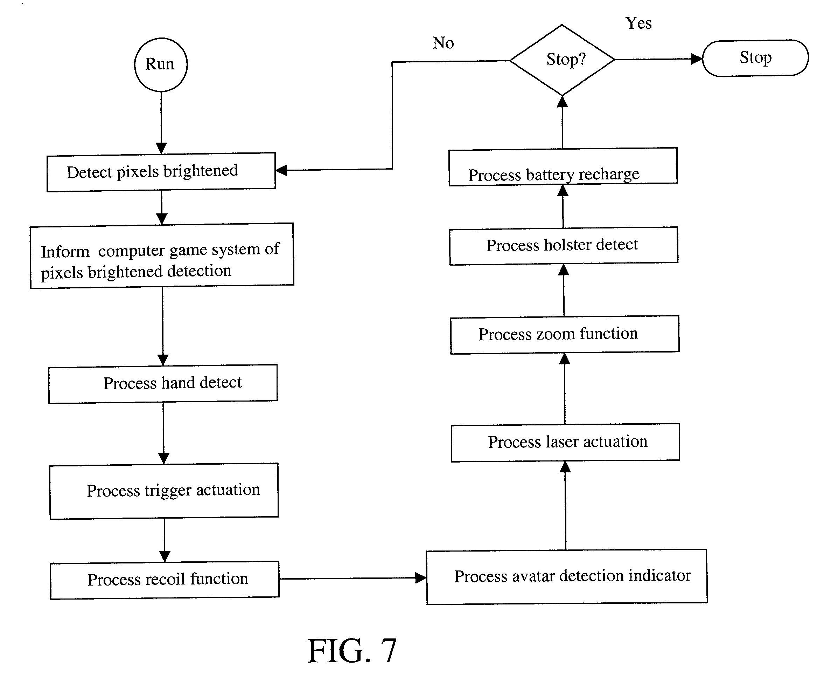

FIG. 7 is a flow chart of the system operation of the preferred embodiment of the present invention of the Figures and comprising optional processes.

FIG.'s 8A and 8B illustrate optical guns that alternatively support bidirectional or unidirectional wireless communication with a computer game system.

The following description is provided to enable any person skilled in the art to make and use the invention and sets forth the best modes contemplated by the inventor of carrying out his or her invention. Various modifications, however, will remain readily apparent to those skilled in the art, since the generic principles of the present invention have been defined herein.

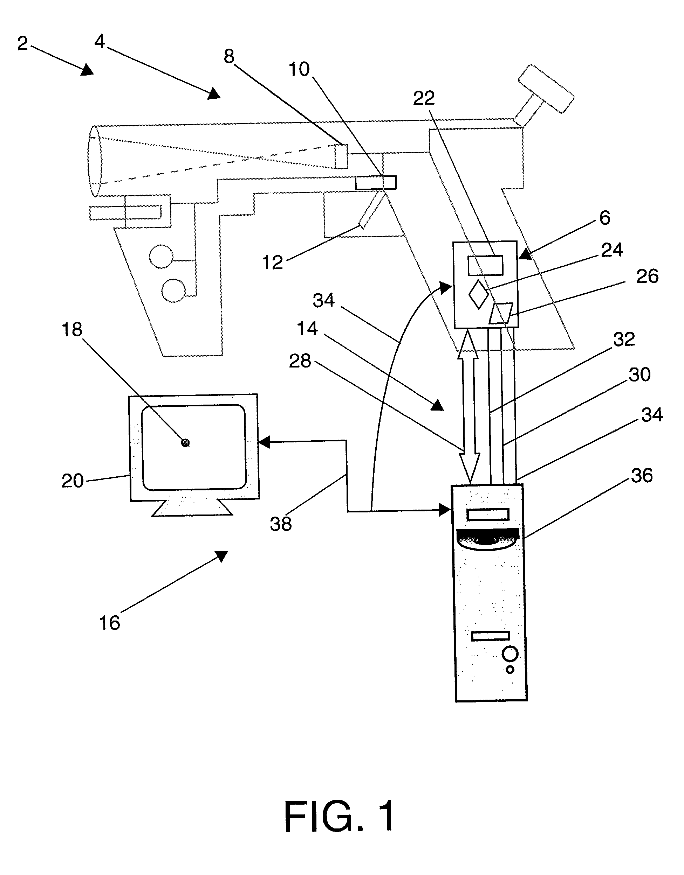

Referring now generally to the Figures, and particularly to FIG. 1, a preferred embodiment of the present invention, or invented gun 2, is presented. The invented gun 2 has a gun body 4, a control module 6, a light sensor 8, a trigger circuit 10 with a trigger 12, and a communications interface 14 to a computer game system 16. The light sensor 8 detects when a plurality of pixels 18 on a video screen 20 of the computer game system 16 brightens and informs the control module 6 of a detected pixel plurality brightening. The control module 6 then processes the time occurrence of the detected pixels brightening in combination with signals received from the trigger circuit 10 and information received over the communications bus 14, and therefrom determines, or partially determines, a relatedness, or degree of relatedness, of the detected pixels brightening detection within the context of a computer game scenario running on the computer game system 16.

The communications interface 14, or comms bus 14, of the invented gun 2 may be a USB, or substantially a USB, or a derivative of a USB, or a variation of a USB, or a modified USB, or a suitable game port system, a MICROSOFT XBOX game system compatible communications interface, or a NINTENDO game system compatible communications bus, or a SONY PLAYSTATION game system compatible communications bus, or an IBM computer system standards compatible communications bus, or an APPLE COMPUTER computer system standards compatible communications bus known in the art, or an IEEE technology society standard compatible communications bus or game port system known in the art , or another suitable communications bus known in the art.

The control module 6 has a microprocessor 22, a memory-containing gun operating instructions 24, and a processing memory 26 that enable the control module 6 to manage information required for storage and provision to and from the microprocessor 22, or gun processor 22, during the operation of the invented gun.

The communications bus 14, or comms bus, provides bidirectional electrical signal communications between the control module 6 and the computer game system 16. The comms bus includes a plurality of signal lines 28, an electrical ground line 30, and a power line 32. The invented gun 2 optionally includes a video sampling cable 34 that captures data as this data is transmitted from a computer game system computer 36 to the computer game video screen 20 via a video signal line 38. The control module 6 processes this data in view of trigger actuation signals received from the trigger circuit 10 and pixel brightening detection signals received from the light sensor 8. The control module 6 thereby determines where within the video screen 20 the invented gun 2 is pointed proximate to the time that the trigger 12 of the invented gun 2 is manually pulled, depressed or actuated by a game system player.

The video sampling cable 34 may be included in the comms bus 14 or may be a separate input signal line 34 from the computer game system 16 and to the control module 6 in certain alternate preferred embodiments of the method of the present invention.

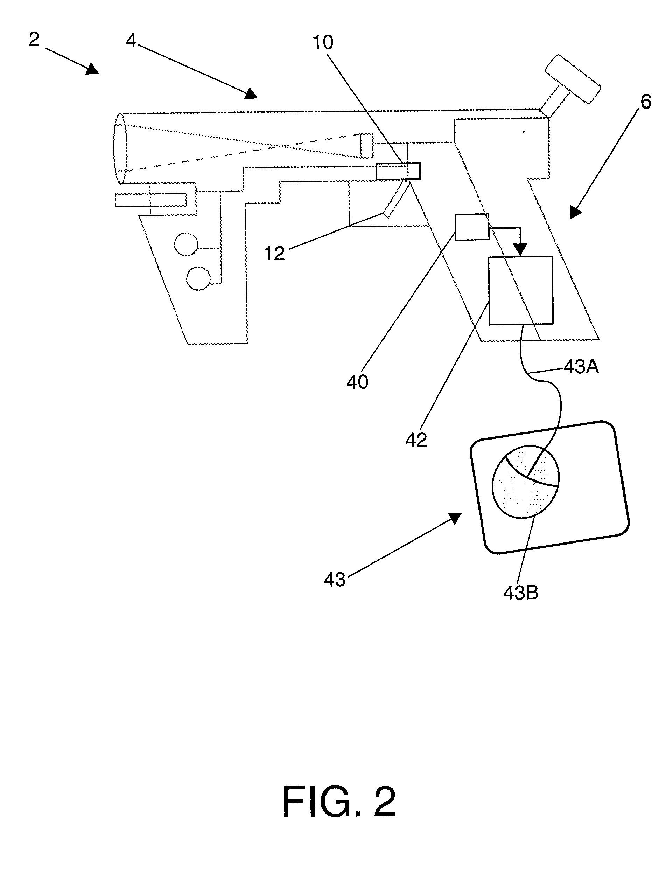

Referring now generally to the Figures and particularly to FIG. 2 the invented gun 2 further comprises a hand detector 40 that senses the proximity of the game player's hand to a handle 42 of the gun body, or additionally or alternatively, senses the proximity of the game player's hand or finger to the trigger 12 of the gun body 4. Manual actuation of the trigger 12 causes the trigger circuit 10 to inform the control module 6 that the game player has chosen to fire or release a simulated round or a simulated burst of rounds within the context of the role of the invented gun 2 within the computer game scenario. The hand detector 40 thereby alerts the control module 6 to a grasping of the invented gun 2 by the game player, and of the possibility of an imminent actuation of the trigger 12 by the game player. The control module 6 may therefrom select a more appropriate readiness state for the optical gun 2 and thereby more efficiently operate the invented gun 2. The invented gun 2 further comprises a peripheral input module 43 that communicates with the optical gun 2, or optionally and more specifically with the gun control module 6, by a communications link 43A. The gun peripheral input 43 includes a data input peripheral 43B, such as a thumbpad, a foot pedal, an optical wheel or other suitable data or signal input peripheral known in the art. The game player uses the peripheral 43B to indicate choices and selections within the context of a computer game scenario, or to provide information to the optical gun 2 or the computer game system 16.

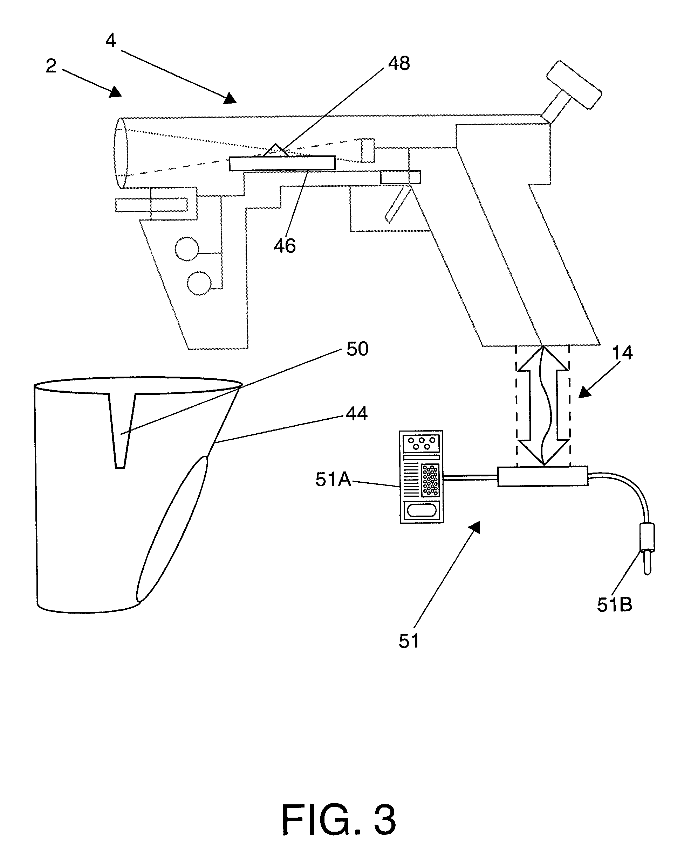

Referring now generally to the Figures and particularly to FIG. 3 the invented optical gun 2 includes a holster 44 and a holster proximity-sensing module 46. The invented gun has a small switch 48 of the holster proximity detector 46 on the gun body 4. The switch 48 its into a corresponding slot or receptacle 50 in the holster. The invented gun 2 detects the state of the switch 48 and may inform the computer game system 16 that the gun 2 is holstered. The optical gun 2 includes an interface harness 51 that presents two or more optional hardware connecters 51 A, 51 B to computer game systems 16. The addition of more than one type connector 51A, 51B allows the optical gun 2 to be electrically connected with computer game systems 16 of differing make, model or standardized communications bus compatibility.

For example, the optical gun 2 may be mass produced with a plurality of interface connectors 51A, 51 B, where each connector 51 A, 51 B is selected from a connector type that is compatible with a suitable interface standard known in the art, to include a USB, or a bus that is substantially a USB, or a derivative of a USB, or a variation of a USB, or a modified USB, or a suitable game port system, or a MICROSOFT XBOX game system compatible communications interface, or a NINTENDO game system compatible communications bus, or a SONY PLAYSTATION game system compatible communications bus, or an IBM computer system standards compatible communications bus, or an APPLE COMPUTER computer system standards compatible communications bus known in the art, or an IEEE technology society standard compatible communications bus known in the art, or another suitable standard or proprietary communications bus or game port system known in the art. The inclusion of one or more additional interface connectors 51A, 51B with the mass-produced optical gun 2 raises the economic value of the optical gun above the prior art by causing the optical gun to have a more ubiquitous range of application and compatibility with commercially available computer game systems.

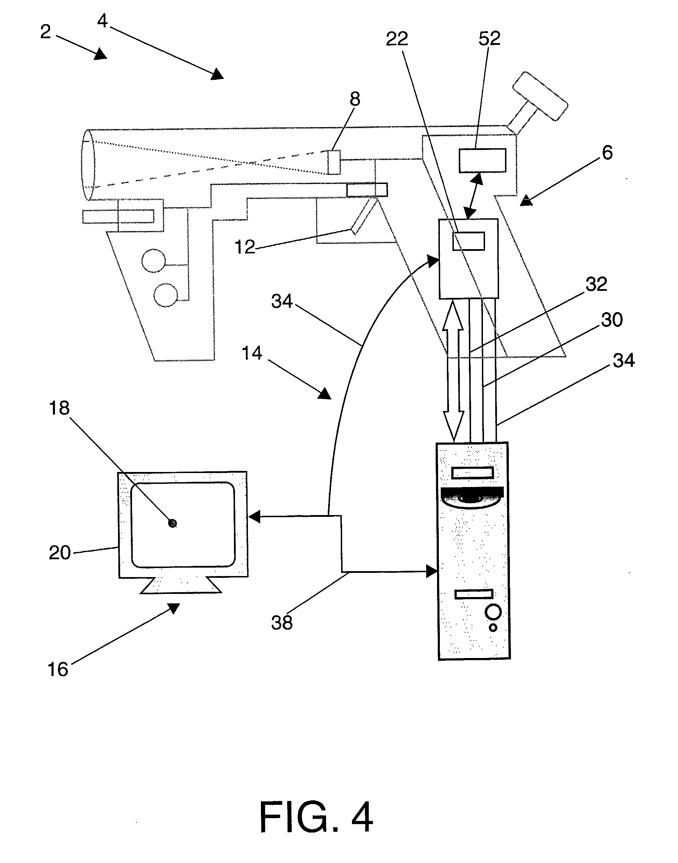

Referring generally to the Figures and particularly to FIG. 4, the invented gun further optionally comprises a recoil simulator 52. The recoil simulator 52 may be or may include a small electric motor or actuator that is used to generate a mechanical force. The mechanical force is intended to simulate the recoil of an actual weapon to the game player. The simulated recoil function may be directed by the computer game system 16 or the gun processor 22, and the command to simulate a weapon's recoil may be transmitted over the comms bus 14 and from the computer game system 16. The simulated recoil function may be used in various preferred embodiments of the method of the present invention to inform, reinforce or add to a game scenario ambience when the control module 6 and/or computer game system 16 determines (1) that the game player has effected a simulated hit on a target, (2) that the game player has been hit within the context of the game scenario, or (3) whenever the game player has effected a simulated firing of the invented gun.

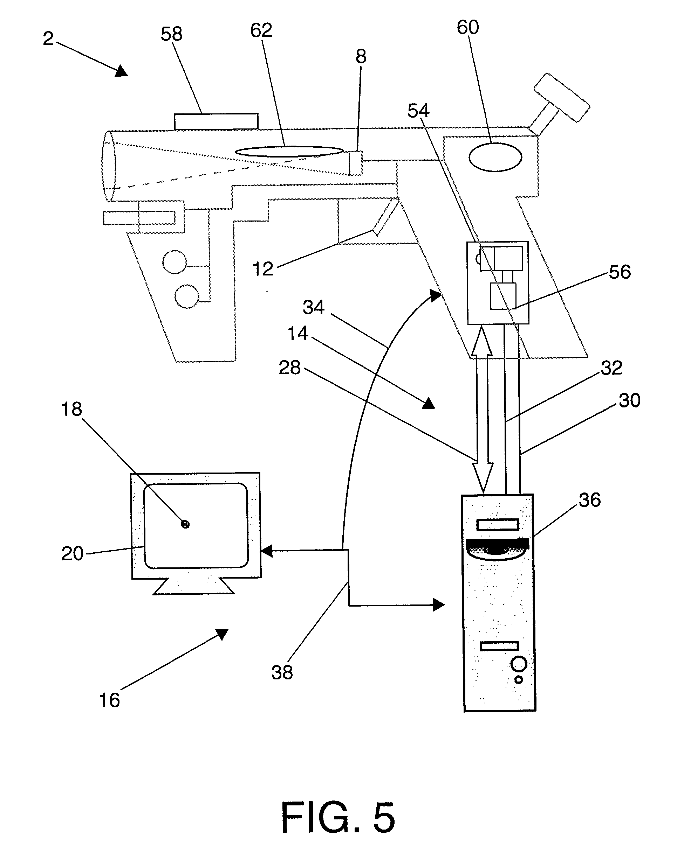

Referring now generally to the Figures, and particularly to FIG. 5 the invented gun includes a battery 54 and a battery charging system 56. The battery 54 supplies electrical power to the invented gun 2 and to the recoil simulator 52. The battery 54 enables the optical gun 2 to provide a quantity of electrical power to elements of the invented gun 2 in excess of the amount of energy that the communications bus, such as a USB or USB-like communications bus, can instantaneously provide from the game system 16 and to the optical gun 2. The battery charging system 56 recharges the battery 54 by channeling electrical power received from the communications bus 14 into the battery. The invented gun 2 may particularly direct the battery charging system 56 to recharge the battery 54 when the gun 2 is sensed to be holstered.

Continuing to refer now generally to the Figures and particularly to FIG. 5 a laser pointer module 58 of the invented gun provides a laser indicator on the screen of the video screen by generating a laser beam that travels from the invented gun 2 and to the screen 20. The invented gun 2 fires the laser beam when the optical sensor 8 indicates that the gun 2 is pointed at the screen 20 such that the beam will hit the screen. The invented gun 2 will turn off the laser, or cause the laser beam to not exit from the invented gun 2, when the optical sensor 8 indicates that the gun 2 is not pointed at the screen 20. This optional inventive feature of the method of the present invention enables the invented gun 2 to reduce or eliminate the intersection of the laser beam with objects, person or surfaces other than the video screen 20. In game play, the location of the intersection of the laser beam with the video screen 20 may be used to aid the player in orienting within a game scenario or in improving the accuracy of simulated firing of the invented gun 2. The invented gun 2 receives instructions from the computer game system 16 to turn on or turn off the laser point via information enclosed in messages, such as in a USB OUT packet or packets , comms bus commands or other communication methods.

Continuing to refer now generally to the Figures and particularly to FIG. 5 the invented gun 2 includes a character or avatar detection indicator 60. The character or avatar detection indicator, or presence indicator 60, indicates to the game player the presence or approach of a character or avatar within the game scenario, and may indicate a characteristic or state of the character or avatar, such as by using colored lighted to indicate the state of the character or avatar, e.g., wounded, angry, or sleeping, or whether a particular avatar or character is a friend, an ally, a foe, a neutral entity or an innocent or unidentified party. In certain preferred embodiments of the present invention the presence indicator 60 indicates the characteristic when the optical gun is pointed at the character or avatar.

Continuing to refer now generally to the Figures and particularly to FIG. 5 the invented gun further includes a the zoom control that activates a zoom function, whereby the interaction of the game player within a computer game scenario is affected by manual manipulations of the zoom control 62, and a screen image of the video display 20 of the computer game system 16 is affected function. The orientation or simulated location of the game player within a game scenario is affected by manual manipulations of zoom control features 62 positioned on the optical gun 2. Alternatively or additionally, the zoom function may affect the field of view presented to the game player by the computer game system 16, whereby the game player may elect to have a more limited field of view but with a larger presentation of one or more visual elements of the game scenario. The actuation and manipulation of the zoom control feature 62 is reported to the computer game system 16 via the comms bus 14.

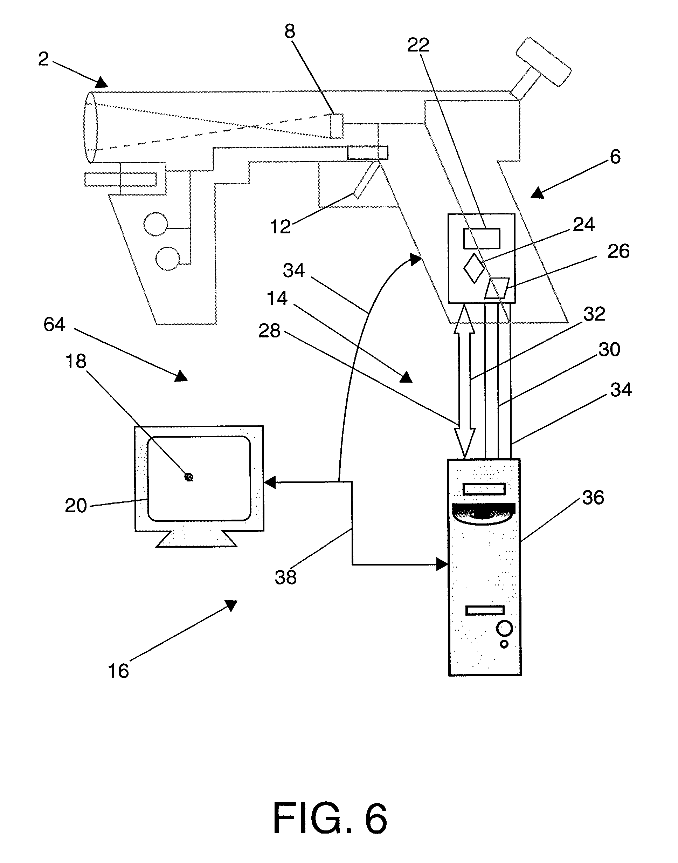

Referring now generally to the Figures and particularly to FIG. 6, the invented system 2 uses the data received from the computer game system 16 and via the video sampling cable 34 to improve the interaction of the present invention with a computer game system 16 that includes a digital television 64. The preferred embodiment of the method of the present invention as actualized in the invented gun 2 removes the phase angle of a digital television image calculation in a optional software technique by (1) recognizing that the invented gun 2 and the screen 20 are to a large degree always out of phase, (2) calculating this phase angle on a composite sync per-frame basis and then (3) mathematically reducing the offset to zero. The software and high-speed digital hardware elements of the gun 2 are both employed to actualize this optional aspect of the method of the present invention. The identification and measurement of certain mathematical values, the calculation of phase angles, frame rates and the resultant accuracy to a large degree depend on a physical principle in mathematics called the beat frequency.

The following discussion explores he calculation of the phase angle according to a preferred embodiment of the method of the present invention. The current composite sync signal (single pixel) can be represented by the function:

$$FS(t) = k*Sin(w1*t + y) \text{ where } f = w/2Pi \text{ or } 17 \text{ ms (60 Hz) and}$$

y is the phase angle.

And let the image on the digital television video screen (single pixel) be represented by the function:

$$FI(t) = p*Sin( w2*t + q) \text{ where } f = w/2Pi \text{ could equal 60 Hz, 100 Hz, 120Hz, etc., and q is the phase angle.}$$

And let the photo detector 8 of the optical gun 2 of the present invention observe the following:

$$P(t) = FI(t) + FS(t).$$

The photo detector 8 of the invented gun 2 observes a beat frequency which is the composite of these two signals, i.e. FI(t) and FS(t). The preferred embodiment of the method of the present invention is directed to find the values of w2 and q. The instantaneous phase angle of these two functions as composed to P(t) is the solution. The processor in the invented does not attempt to solve the equation. The invented gun 2 employs a table driven method whereby the magnitude

|P| peak is collected across a period or a plurality of periods of one or a plurality of frames. The highest point of this peak is the pointed position on the screen 20 of the gun 2. The table contains time offsets from the start of the frame (w1*t) = 0.

Solving then for q, the true offset of time from the beginning of the screen time is contained in this expression:

$$q = -2*csec(1/(2*sin(t*(w1-w2))))$$

And, given the following relationship:

$$T = 1/w2, \text{ where w2 is expressed in hertz.}$$

The optical gun 2 transmits the value of q and/or T to the computer game system 16, whereby the computer game system 16 can calculate the time offset imposed by a digital television and the images displayed on the video screen 20.

The optical gun 2 further observes the number of Vsync counts that occur between the start of a frame and the detection of a particular instance of pixel or area brightening of the video screen 20 and transmits the Vsync count to the computer game system 16 via the computer game system 16. The preferred embodiment additionally detects the Hsync count of a width of an area brightening of the video screen 20 and transmits this Hsync count to the computer game system 16 via the communications interface 14. The Hsync count is then used to determine the center of the brightening of the area of the video screen 20, from which determination the orientation of the optical gun 2 to the video screen 20 is more closely determined.

Certain preferred embodiments of the method of the present invention resolves the true offset T where two fundamental frequencies w1 and w2 are quantified. Additionally and optionally, having derived the fundamental beat frequency of these two functions, this optional aspect of the method of the present invention can pick any point in a measurement range to produce a desired result by recognizing and accommodating for a change, and an instantaneous value, of the phase angle y.

In certain preferred embodiments of the present invention, all computational mathematics performed by the invented optical gun processor 22 are executed with 32-bit, two's complement, fixed point notation. The single measurement point may be taken at random.

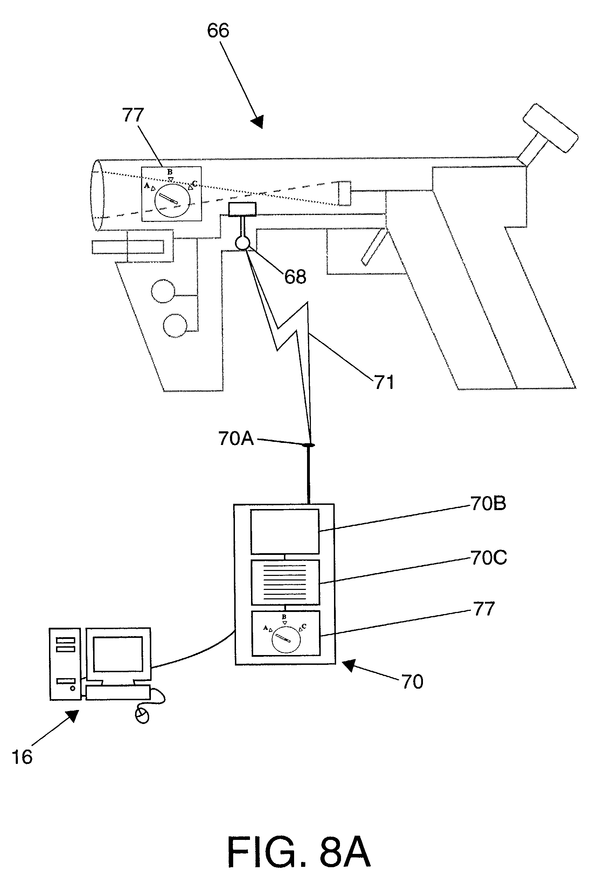

Referring now generally to the Figures, and particularly FIG.'s 8A and 8B, alternative preferred embodiments of the method of the present invention may comprise bidirectional or unidirectional wireless communication with the computer game system 16. The alternate preferred embodiment of the method of the present invention of FIG. 8A, or unidirectional wireless gun 66, includes a wireless transmitter 68, and the computer game system 16 includes a wireless receiver 70. The transmitter 68 sends information about the optical gun's 66 state or detected conditions and sends the information to the receiver 70 of the computer game system 16 by infrared or radio frequency 71, or other suitable wireless transmission means known in the art. The receiver includes a wireless receiver module 70A, a digital logic module 70B and a receiver-to-game system interface 70C. The receiver 70 accepts the information transmitted from the optical gun 66 via the wireless receiver module 70A. The digital logic module 70B then formats a receiver data report that includes the transmitted information. The receiver 70 then sends the receiver data report to the computer game system 16 via the receiver-to-game system interface 70C. The receiver-to-game system interface 70C and the receiver data report may be USB compliant or substantially USB compliant, or be configured or function in accordance with a suitable industry standard or proprietary communications bus as stipulated by MICROSOFT CORPORATION, SONY, SEGA, NINTENDO, IBM or the IEEE, or another suitable communications protocol or game port system known in the art.

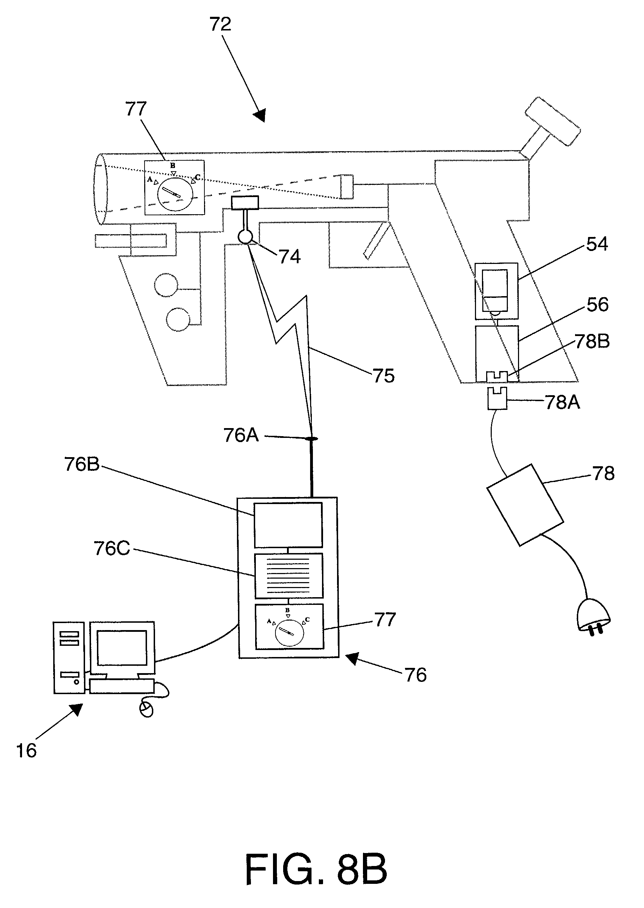

A second alternate preferred embodiment of the method of the present invention, or bidirectional wireless gun 72, of FIG. 8B, includes a gun transceiver 74 in the bidirectional wireless gun 72 and a game transceiver 76 coupled with the computer game system 16. The optical gun transceiver 74 sends and receives information from and to the game transceiver 76. The optical gun transceiver 74 sends gun information about the optical gun's 72 state or detected conditions and sends the gun information to the transceiver 76 of the computer game system 16 by infrared or radio frequency 75, or other suitable wireless transmission means known in the art. The game transceiver 76 includes a wireless transceiver module 76A, a digital logic module 76B and a receiver-to-game system interface 76C. The game transceiver 76 accepts the gun information transmitted from the optical gun 72 via the wireless transceiver module 76A. The digital logic module 76B then formats a receiver data report that includes the transmitted gun information. The game transceiver 76 then sends the receiver data report to the computer game system 16 via the transceiver-to-game system interface 76C. The transceiver-to-game system interface 76C and the receiver data report may be USB compliant or substantially USB compliant, or be configured and function in accordance with a suitable industry standard or proprietary communications bus as stipulated by MICROSOFT CORPORATION, SONY, SEGA, NINTENDO, IBM or the IEEE, or another suitable communications protocol or game port system known in the art. The game transceiver may additionally transmit data or instruction to the optical gun by suitable wireless transmission means known in the art, such as radio frequency or infrared transmission.

The receiver 70, transmitter 68 and transceivers 74, 76 may each further comprise a channel selector 77, whereby a user decides which channel may be used by a particular wireless optical gun 66, 72 to transmit or receive wireless signals to and from the computer game system 16. This optional capability facilitates the use of two or more optical guns 66, 72 simultaneously with the computer game system 16 by dedicated separate wireless transmission frequencies or band to individual optical guns 66, 72. The channel selector may be a manual selector, whereby the game player manually selects the channel for use by the gun 2 by moving a manual switch to a pre-established position.

The unidirectional wireless gun 66 and the bidirectional wireless gun 72 each have a multiple channel auto detect, or a channel select switch, to select a radio frequency for information transmission. These wireless embodiments 66, 72 may also have a battery charger 78, whereby the battery 54 of the optical gun is charged with electrical power by removably connecting a power source or outlet to the battery 54 via the battery charger 78.

The gun control module 6 may be integrated in a single chip solution that comprises a suitable semiconductor processor device, such as a Microchip 16C745/16C765, or a Cypress 630001 A, or suitable derivatives thereof, or another suitable electronic device known in the art. Certain preferred embodiments of the method of the present invention having a single chip, device or multi-chip module comprised by gun control module 6 include the following elements and features within or associated with the control module 6:

    1) Capture/Compare registers, or CCP. Two CCP first in first out arrays, or FIFO arrays, each FIFO array having 24 bits that are 16 deep. The CCP structure communicates with an interrupt signal when a next to last capture has been completed. The source clock for the CCP is a 24 MHz clock. The clock size is also 24 bits and is captured into the FIFO array after an event. In addition, the module 6 includes a hold-off counter which is setable by an 8-bit register. The hold off counter holds the capture event until the IRQ occurs. The 16 deep FIFO arrays are readable and writeable;

2) Prioritized interrupt structure. The highest IRQ should be the RESET, followed by CCPIRQ;

3) High speed RISK based CPU core. The core should execute instructions at 24 Mhz. CPU mathematics at 24 bits; and

4) Analog to Digital convertors. The thumpad requires an 8-bit A/D convertor.

Those skilled in the art will appreciate that the above description is illustrative, and not restrictive. Many other embodiments will be apparent to those of skill in the art upon reviewing the above description.

**Claims**

1. An optical gun for use with a computer game system, the computer game system having a game computer, a video display and a video signal bus coupling the game computer and the video display, the optical gun comprising:

   a control module, the control module having a processor and a memory; and
   a serial interface, the serial interface coupling the control module and the
   computer game system.

2. The optical gun of claim 1, wherein the optical gun further comprises a hand detect sensor, the hand detect sensor for detecting a proximity of a human hand to the optical gun and informing the processor of the hand detection.

3. The optical gun of claim 2, wherein the hand detect sensor is selected from the group consisting of a thermal sensor, a pressure sensor, an infrared detector, a motion detector, a light detector and an electromechanical switch.

4. The optical gun of any preceding claim, wherein the optical gun further comprises:

   a holster, the holster sized to substantially house a barrel of the optical gun; and
   a holster sensor, the holster detect sensor for detecting an insertion of the barrel of the optical gun into the holster, and the holster sensor informing the processor of the holster insertion.

5. The optical gun of claim 4, wherein the holster sensor is selected from the group consisting of a thermal sensor, a pressure sensor, an infrared detector, a motion detector, a light detector and an electromechanical switch.

6. The optical gun of any preceding claim, wherein the optical gun further comprises a recoil simulator generator, the recoil simulator generator for delivering a simulated recoil to a game player as directed by the computer game system.

7. The optical gun of claim 6, wherein the serial interface comprises a power line, the power line for delivering power to a battery, which in turn is for delivering power to the recoil simulator generator.

8. The optical gun of claim 7 when dependent on any one of claims 4 to 5, the optical gun being arranged such that the battery is charged when the holster sensor informs the processor of an insertion of the barrel into the holster.

9. The optical gun of any preceding claim, wherein the optical gun further comprises a laser pointer, the laser emitting light when the optical gun determines or as the computer game system determines that the optical gun is pointed at the video screen.

10. The optical gun of any preceding claim, wherein the optical gun further comprises a visual indicator, the visual indicator informing the user when the optical gun determines that the optical gun is pointed at a friend character and/or the optical gun is pointed at a foe character.

11. The optical gun of any preceding claim, wherein the optical gun further comprises a zoom control, whereby the user directs the computer game system to increase a magnification of the visual display as presented to the user.

12. The optical gun of any preceding claim, wherein the serial interface includes a wireless communications link between the optical gun and the computer game system.

13. The optical gun of claim 12, wherein the wireless communications link is uni-directional and whereby the optical gun provides data to the computer game system.

14. The optical gun of claim 12 or 13, wherein the optical gun further comprises a multiple channel auto detect.

15. The optical gun of any one of claims 1 to 11, wherein the serial interface comprises a voltage power line, a ground line, and at least one signal line.

16. The optical gun of claim 15, wherein the serial interface comprises USB or USB-compatible communication bus.

17. The optical gun of any one of claims 1 to 11, wherein the serial interface comprises a communications bus selected from the group consisting of a MICROSOFT XBOX game system compatible communications interface, a MICROSFT XUSB compatible communications interface, a NINTENDO game system compatible communications bus, an IBM computer system standards compatible communications bus, an APPLE COMPUTER computer system standards compatible communications bus, a SONY CORPORATION PLAYSTATION computer system standards compatible communications bus, a SONY CORPORATION GAME CUBE computer system standards compatible communications bus, a SEGA CORPORATION DREAMCAST computer system standards compatible communications bus, and an IEEE technology society standard compatible communications bus.

18. The optical gun of any preceding claim, wherein the optical gun further comprises a video sampling cable, the video sampling cable for providing a video frames as sent to the video display to the optical gun.

19. The optical gun of claim 12 or claim 16, wherein the optical gun further comprises a battery and a battery charger, whereby the battery provides power to the optical gun and the battery charger transmits power to the battery.

20. The optical gun of claim 19, when dependent on claims 4 or 5, wherein the battery is charged when the holster sensor informs the processor of an insertion of the barrel into the holster.

21. The optical gun of any preceding claim, wherein the serial interface further comprises at least a first connector and a second connector, and where the first connector and the second connector are configured to enable a hardware communication connection with a communications bus.

22. The optical gun of any preceding claim, wherein the gun further comprises a peripheral input module, the peripheral input module operatively connected with the optical gun and the peripheral input module for providing a game player a means to transmit information to the optical gun.

23. The optical gun of claim 22, wherein the peripheral input module further comprises an input device selected from the group consisting of a thumbpad, a foot pedal an optical wheel and a mouse.

24. The optical gun of claim 12, wherein the optical gun further comprises at least two wireless communications channel selections and manual switch to select one of the at least two wireless communications channel selections for use in wireless communications between the optical gun and the computer game system.

25. The optical gun of claim 24, wherein the at least two wireless communications channel selections comprise uni-directional communications channel selections for use in wireless communications from the optical gun and to the computer game system.

26. The optical gun of claim 24, wherein the at least two wireless communications channel selections comprise bidirectional communications channel selections for use in wireless communications between the optical gun and the computer game system.

27. The optical gun of any one of claims 1 to 11, wherein the serial interface further comprises a cable bundle, the cable bundle having at least two hardware connectors, each hardware connector for connection with a computer game system.

28. The optical gun of claim 27, wherein each connector is selected from the group consisting of a MICROSOFT XBOX game system compatible communications interface, a MICROSFT XUSB compatible communications interface, a NINTENDO game system compatible communications bus, an IBM computer system standards compatible communications bus, an APPLE COMPUTER computer system standards compatible communications bus, a SONY CORPORATION PLAYSTATION computer system standards compatible communications bus, a SONY CORPORATION GAME CUBE computer system standards compatible communications bus, a SEGA CORPORATION DREAMCAST computer system standards compatible communications bus, and an IEEE technology society standard compatible communications bus.

29. The optical gun of any one of claims 1 to 10, wherein the optical gun further comprises a zoom control, wherein the zoom control activates a zoom function, whereby the interaction of the game player within a computer game scenario is affected by manual manipulations of the zoom control.

30. The optical gun of claim 29, wherein a screen image of the video display of the computer game system is affected by manual manipulations of the zoom control.

31. The optical gun of claim19, wherein the battery charger is detachably attached to the battery, whereby the optical gun is detachably attached to the battery charger to recharge the battery and detached from the battery charger for use in game play.

32. The optical gun of claim 1, wherein the control module is an integrated semiconductor device.

33. A method of generating accurate timing by an optical gun in communication with a computer game system, the computer game system running a computer game and transmitting video signals to a video display, the method consisting of:

    a. providing an optical gun having an optical senor, a processor, memory and a communications interface, the memory for use by the processor in capturing and analyzing data;
    b. observation of the video display by the optical sensor;
    c. providing the video signals to the optical gun;
    d. determining a phase timing offset value introduced the video display by means of the processor and the memory; and
    e. informing the computer game system of the phase time offset value via the communications interface.

34. A method of determining a time offset introduced by a digital television after receipt of video display information from a computer game system, the digital television having a video display and the video display signal having Vsync and Hsync information, the method consisting of:

    a. providing an optical gun having a processor, a memory, a communications channel, and an optical sensor,

        i. the memory for use by the processor in capturing and analyzing data;
        ii. the communications channel for providing the video display information to the optical gun and providing bi-directional communications between the optical gun and the computer game system;
        iii. the optical sensor for detecting pixel brightening of an area of the video display;

    b. transmitting the video display information to the optical gun via the video display cable;
    c. pointing the optical sensor at the video display screen;
    d. detecting pixel brightening by the optical gun of the area of the video display screen;
    e. determining the time period between two brightness peaks detected by the optical sensor;
    f. deriving a phase angle shift value of the video display screen; and
    g. transmitting the phase angle shift value from the optical gun to the computer game system.

35. The method of claim 34, wherein the time period between two peaks of pixel brightening is estimated by multiple detections of the brightness peak and calculating an average time period value, and determining the phase angle with the average time period value.

36. The method of claim 34 or 35, wherein the optical gun detects the number of Vsync counts displayed on the video display related to a brightening of the area of the video display screen, and transmitting the number of Vsync counts to the computer game system.

37. The method of claim 34, 35 or 36, wherein the optical gun detects the number of Hsync counts displayed on the video display related to a brightening of the area of the video display screen, and transmitting the number of Hsync counts to the computer game system, wherein the spot center is determined.

FIG. 1

FIG. 2

FIG. 3

# FIG. 4

FIG. 5

FIG. 6

EP 1 293 237 A2

```
                                                No          ┌────────┐    Yes
      ┌─────┐                          ┌────────────────────│ Stop?  │──────────▶  ( Stop )
      │ Run │                          │                    └────────┘
      └──┬──┘                          │                         ▲
         │                             │                         │
         ▼                             ▼                  ┌───────────────────────┐
 ┌────────────────────────┐   ┌────────────────────────┐  │ Process battery recharge │
 │ Detect pixels brightened │◀─┘                        │  └───────────┬───────────┘
 └───────────┬────────────┘                                            ▲
             │                                           ┌───────────────────────┐
             ▼                                           │ Process holster detect  │
 ┌────────────────────────┐                              └───────────┬───────────┘
 │ Inform  computer game system of │                                 ▲
 │ pixels brightened detection     │                      ┌───────────────────────┐
 └───────────┬────────────┘                               │ Process zoom function   │
             │                                            └───────────┬───────────┘
             ▼                                                        ▲
 ┌────────────────────────┐                               ┌───────────────────────┐
 │ Process hand detect     │                              │ Process laser actuation │
 └───────────┬────────────┘                               └───────────┬───────────┘
             │                                                        ▲
             ▼                                                        │
 ┌────────────────────────┐                               ┌─────────────────────────────────┐
 │ Process trigger actuation │                            │ Process avatar detection indicator │
 └───────────┬────────────┘                               └─────────────────────────────────┘
             │                                                        ▲
             ▼                                                        │
 ┌────────────────────────┐                                          │
 │ Process recoil function │──────────────────────────────────────────┘
 └────────────────────────┘
```

# FIG. 7

FIG. 8A

FIG. 8B